Europäisches Patentamt

European Patent Office

Office européen des brevets

(19)

(11) **EP 1 048 620 B1**

(12) **EUROPÄISCHE PATENTSCHRIFT**

(45) Veröffentlichungstag und Bekanntmachung des Hinweises auf die Patenterteilung:
**08.10.2003 Patentblatt 2003/41**

(51) Int Cl.7: **C02F 1/32**, H01J 65/04

(21) Anmeldenummer: **00201427.2**

(22) Anmeldetag: **19.04.2000**

(54) **Vorrichtung zur Desinfektion von Wasser mit einer UV-C-Gasentladungslampe**

Device for the disinfection of water using a UV-C-gas discharge lamp

Dispositif pour la désinfection d'eau à l'aide d'une lampe à décharge UV-C

(84) Benannte Vertragsstaaten:
**DE FR GB**

(30) Priorität: **28.04.1999 DE 19919169**

(43) Veröffentlichungstag der Anmeldung:
**02.11.2000 Patentblatt 2000/44**

(73) Patentinhaber:
- **Philips Intellectual Property & Standards GmbH**
  **20099 Hamburg (DE)**
  Benannte Vertragsstaaten:
  **DE**
- **Koninklijke Philips Electronics N.V.**
  **5621 BA Eindhoven (NL)**
  Benannte Vertragsstaaten:
  **FR GB**

(72) Erfinder:
- **Jüstel, Thomas**
  **52064 Aachen (DE)**
- **Nikol, Hans**
  **52064 Aachen (DE)**
- **Dirscherl, Jürgen**
  **52064 Aachen (DE)**
- **Wiechert, Detlev U.**
  **52064 Aachen (DE)**

(74) Vertreter: **Volmer, Georg, Dipl.-Ing.**
**Philips Intellectual Property & Standards GmbH,**
**Postfach 50 04 42**
**52088 Aachen (DE)**

(56) Entgegenhaltungen:
EP-A- 0 383 388    DE-A- 2 535 816
US-A- 4 983 881    US-A- 5 714 835

EP 1 048 620 B1

## Beschreibung

Die Erfindung betrifft eine Vorrichtung zur Desinfektion von Wasser, die eine Gasentladungslampe mit einem Entladungsgefäß mit Wandungen, die aus einem dielektrischen Material bestehen, die auf ihrer äußeren Oberfläche mindestens mit einer ersten Elektrode versehen sind und mit einer Gasfüllung, die Xenon enthält, umfaßt.

Durch Desinfektion werden Krankheitserreger wie Bakterien, Viren, Pilze und Protozoen unschädlich gemacht. Seit langem sind sowohl chemische als auch physikalische Desinfektionsverfahren bekannt. Auch zur Desinfektion von Wasser werden chemische und physikalischeverfahren eingesetzt. Die chemischen Verfahren arbeiten zum größten Teil unter Verwendung von Chlorverbindungen und Ozon. Weniger belastend für die Umgebungsluft sind die physikalische Verfahren wie Filtration, Ultraschall, Erhitzen oder Bestrahlung mit UV-Licht. Die Bestrahlung von Wasser mit UV-Strahlung ist zudem ein Verfahren, das kontinuierlich und wartungsfrei arbeitet.

Bekannt ist es, zur Desinfektion von Wasser mittels UV-Strahlung Niederdruck- oder Hochdruck-Quecksilberentladungslampen zu verwenden, die UV-Strahlung der Wellenlänge 254 nm und 185 nm mit hohem Wirkungsgrad abstrahlen.

QuecksilberQuecksilber-Entladungslampen haben aber für die diskontinuierliche Behandlung von kleinen Wassermengen, z. B. an einem Zapfhahn, gewisse Nachteile. Beispielsweise sind sie nicht sofort betriebsbereit, wenn Wasser entnommen werden soll. Weil sie einen Starter brauchen, zünden sie mit einer Verzögerung von einigen Sekunden. Außerdem erreichen sie ihre volle Leistung erst, wenn sie ihre Betriebstemperatur erreicht haben. Durch die niedrigen Wassertemperaturen des Leitungswassers verlängert sich zusätzlich der Zeitraum, bis die Betriebstemperatur erreicht ist. Benötigt wird jedoch eigentlich sofort eine UV-Strahlung von hoher Intensität, um Wasser- und Energieverschwendung zu vermeiden.

Aus der EP 0312 732 ist es bereits bekannt, Hochleistungsstrahler für ultraviolettes Licht mit einem mit Füllgas gefüllten Entladungsraum, dessen Wandungen durch ein erstes und ein zweites Dielektrikum gebildet sind, welches auf seinen dem Entladungsraum abgewandten Oberfläche mit ersten und zweiten Elektroden versehen ist, mit einer an die ersten und zweiten Elektroden angeschlossenen Wechselstromquelle zur Speisung der Entladung, bei dem sowohl die Dielektrika als auch die ersten und die zweiten Elektroden für die besagte Strahlung durchlässig ist, zur Entkeimung von Wasser zu verwenden. Um die spektrale Zusammensetzung der Strahlung zu verändern, wird die Zusammensetzung des Füllgases verändert.

Weiterhin ist aus US4,983,881 ein Hochleistungsstrahler für sichtbares Licht bekannt, der aus einem durch Dielektrika begrenzten und mit einem Edelgas oder Gasgemisch gefüllten Entladungsraum besteht. An die Dielektrika schliessen sich lumineszierende Schichten an. Sowohl das Dielektrikum als auch die auf der dem Entladungsraum abgewandte Oberflächen der Dielektrika liegende Elektrode sind für die durch stille elektrische Entladungen erzeugte Strahlung transparent. Auf diese Weise wird ein grossflächiger Strahler mit hohem Wirkungsgrad geschaffen, der mit hohen elektrischen Leistungsdichten bis hin zu 50 KW/m$^2$ aktiver Elektrodenoberfläche betrieben werden kann.

Die vorliegende Erfindung hat die Aufgabe, eine Vorrichtung zur Desinfektion von Wasser, die eine Gasentladungslampe mit einem Entladungsgefäß mit Wandungen, die aus einem dielektrischen Material bestehen, die auf ihrer äußeren Oberfläche mindestens mit einer ersten Elektrode versehen sind, und mit einer Gasfüllung, die Xenon enthält, umfaßt, zur Verfügung zu stellen, deren Strahlung eine spektrale Zusammensetzung hat, die optimal zur Desinfektion von Wasser geeignet ist.

Erfindungsgemäß wird die Aufgabe gelöst durch eine Vorrichtung zur Desinfektion von Wasser, die eine Gasentladungslampe mit einem Entladungsgefäß mit Wandungen, die aus einem dielektrischen Material bestehen, die auf ihrer äußeren Oberfläche mindestens mit einer ersten Elektrode versehen sind und mit einer Gasfullung, die Xenon enthält, umfaßt, wobei die Wandungen mindestens auf einem Teil ihrer inneren Oberfläche mit einem Überzug , der einen im UV-C-Bereich emittierenden Leuchtstoff, der einen Aktivator aus der Gruppe Pb$^{2+}$, Bi$^{3+}$ und Pr$^{3+}$ in einem Wirtsgitter enthält, umfasse, versehen sind.

Eine derartige Vorrichtung zur Desinfektion von Wasser ist jederzeit innerhalb von Millisekunden zu 100% betriebsbereit und sie hat eine spektrale Zusammensetzung der UV-Strahlung, die ausschließlich in dem für die Desinfektionswirkung relevanten Bereich zwischen 230 und 300 nm liegt. Eine unnötige Erwärmung des Wassers oder Erzeugung von sichtbarem Licht wird dadurch vermieden. Dadurch, daß keine Strahlung mit einer Wellenlänge unter 230 nm erzeugt wird, wird auch kein gesundheitsschädliches Nitrit gebildet. Sie kann eine Lebensdauer von mehr als 20 000 Betriebsstunden erreichen.

Es kann bevorzugt sein, daß der Leuchtstoff Pr$^{3+}$ und Lanthan enthält. Diese Leuchtstoffe strahlen UV-C-Strahlung mit zwei Banden im Bereich von 220 und 265 nm ab. Dort liegt das Maximum der Desinfektionswirkung von UV-Strahlung gemäß DIN 5031-10. UV-C-Strahlung dieser Wellenlängen wird von den DNA-Nucleotiden der Mikroorganismen absorbiert, bewirkt dort eine Photodimerisation und damit die Abtötung der Mikroorganismen.

Es kann auch bevorzugt sein, dass der Leuchtstoff Pr$^{3+}$ und Yttrium enthält. Besonders bevorzugt ist, daß der Leuchtstoff aus der Gruppe LaPO$_4$4:Pr, LaBO$_3$:Pr, LaB$_3$O$_6$:Pr, YPO$_4$:Pr, YBO$_3$:Pr und Y$_2$SiO$_5$Pr ausgewählt ist.

Es kann auch bevorzugt sein, dass der Leuchtstoff aus der Gruppe $YPO_4$:Bi und $LuPO_4$:Bi ausgewählt ist.

Die Elektroden können aus einem Metall oder einer Legierung bestehen, das UV-C-Licht reflektiert.

Die Erfindung betrifft auch eine Gasentladungslampe mit einem Entladungsgefäß mit Wandungen, die aus einem dielektrischen Material bestehen, die auf ihrer äußeren Oberfläche mindestens mit einer ersten Elektrode versehen sind und mit einer Gasfüllung, die Xenon enthält, umfaßt, wobei die Wandungen mindestens auf einem Teil ihrer inneren Oberfläche mit einem Überzug, der einen im UV-C-Bereich emittierenden Leuchtstoff, der einen Aktivator aus der Gruppe $Pb^{2+}$, $Bi^{3+}$ und $Pr^{3+}$ in einem Wirtsgitter enthält, umfasst, versehen sind.

Nachfolgend wird die Erfindung anhand von neun Figuren und vier Ausführungsbeispielen weiter erläutert.

Fig. 1 zeigt eine erste Ausführungsform einer zylindrischen Gasentladungslampe.

Fig. 2 zeigt eine erste Ausführungsform einer koaxialen Gasentladungslampe im Querschnitt.

Fig. 3 zeigt eine zweite Ausführungsforrn einer koaxialen Gasentladungslampe im Querschnitt.

Fig.4 zeigt eine dritte Ausführungsform einer koaxialen Gasentladungslampe im Querschnitt.

Fig. 5 zeigt eine vierte Ausführungsform einer koaxialen Gasentladungslampe im Querschnitt.

Fig. 6 zeigt das Emissionsspektrum einer Gasentladungslampe mit $SrSiO_3$:Pb als Leuchtstoff.

Fig. 7 zeigt das Emissionsspektrum einer Gasentladungslampe mit $CaSO_4$:Pb als Leuchtstoff.

Fig. 8 zeigt das Emissionsspektrum einer Gasentladungslampe mit $(Ca,Mg)SO_4$:Pb als Leuchtstoff.

Fig. 9 zeigt das Emissionsspektrum einer Gasentladungslampe mit $LaO_4$:Pr als Leuchtstoff.

Eine Lampe nach der Erfindung umfaßt ein Entladungsgefäß mit einer Gasfüllung, die Xenon enthält, und dessen Wandungen mindestens mit einer ersten und einer zweiten Elektrode und mindestens zum Teil mit einem Überzug, der einen Leuchtstoff enthält, versehen sind.

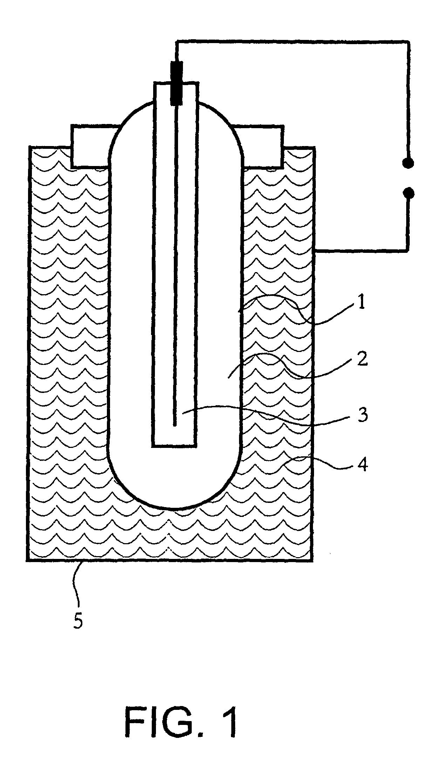

Für das Entladungsgefäß sind eine Vielzahl von Bauformen wie Platten, einfache Rohre, Koaxialrohre, gerade, u-förmig, kreisförmig gebogene oder gewendelte, zylinderförmige oder anders geformte Entladungsrohren möglich. Eine typische Bauform für eine Lampe für eine Vorrichtung zur Wasserdesinfektion als Haushaltsgerät ist die Tauchform gemäß Fig. 1. In dem Gasentladungsgefäß list konzentrisch ein Glasrohr 3 angeordnet. In das innere Glasrohr ist ein Draht eingeschoben. Dieser bildet die erste, innere Elektrode der Gasentladungslampe. Das um die Lampe zirkulierende Wasser 4 bildet zusammen mit der metallischen Gefäßwand 5 der Wasserdesinfektionsvorrichtung die zweite, äußere Elektrode. Das Entladungsgefäß ist gasdicht verschlossen. Der Innenraum ist mit Xenon oder einem Xenon enthaltenden Gas gefüllt. Die beiden Elektroden sind mit beiden Polen einer Wechselstromquelle verbunden. Die Elektrodengeometrie zusammen mit dem Druck im Entladungsgefäß und die Gaszusammensetzung werden auf die Daten der Wechselstromquelle abgestimmt.

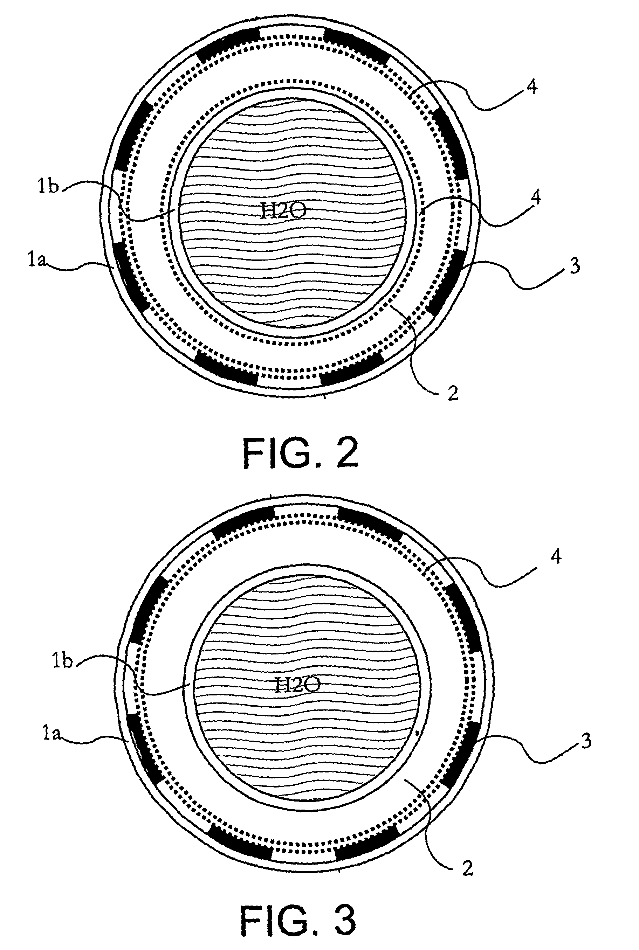

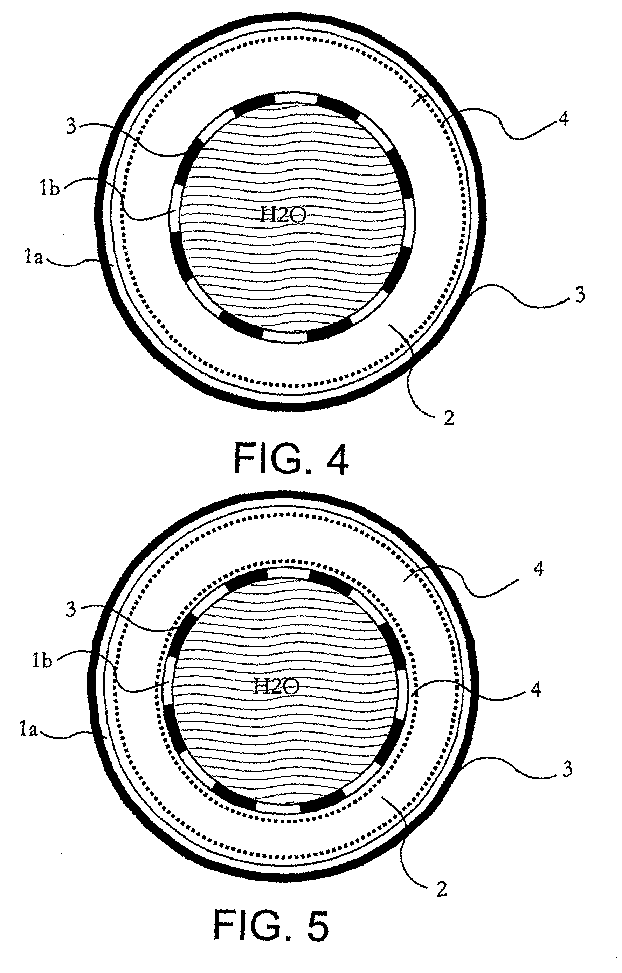

Eine andere typische Bauform für Wasserdesinfektion als Haushaltsgerät ist die zentral von Wasser durchflossene Koaxialform gemäß Fig.2, 3, 4 und 5. Das Entladungsgefäß besteht aus zwei koaxialen Glaskörpern 1a, 1b, die gasdicht zu einer Hohlmanschette verbunden sind. Der Ringspalt zwischen den beiden koaxialen Glaskörpern bildet den Entladungsraum und ist mit Xenon oder einem Xenon enthaltenden Gas 2 gefüllt. Das zu desinfizierende Wasser fließt durch das innere Rohr, an dessen Innenwand eine transparente Elektrode 3 aufgebracht ist. Das äußere Glas ist mit einem engmaschigen Drahtnetz bedeckt, das die äußere Elektrode 3 bildet. Die Stromversorgung erfolgt durch eine an diese beiden Elektroden angeschlossene Wechselstromquelle.

Als Material für das Endadungsgefäß werden Quarz oder Glassorten verwendet, die für UV-C-Strahlung durchlässig sind.

Die Elektroden bestehen aus einem Metall, z. B. Aluminium oder Silber, einer Metalliegierung oder aus einer transparenten leitfähigen anorganischen Verbindung z. B. indiumdotiertem Zinnoxid (ITO). Sie können als Beschichtung, als aufgeklebte Folie, als Draht oder als Drahtnetz ausgebildet sein.

Um die Lichtstärke in eine bestimmte Richtung zu bündeln, kann ein Teil des Entladungsgefi&s mit einer Beschichtung versehen werden, die als Reflektor für VUV und UV-C-Licht wirkt.

Das Entladungsgefäß ist mit sauerstoffreiem Xenon oder einem Gasgemisch, das Xenon enthält, gefüllt. Die Innenwand des EntladungsgePäßes ist teilweise oder ganz mit einem Überzug, der den Leuchtstoff enthält, beschichtet. Weiterhin kann der Überzug noch organisches oder anorganisches Bindemittel oder eine Bindemittelzusammensetzung enthalten.

Der Leuchtstoff besteht aus einem Wirtsgitter das mit einigen Prozent eines Aktivators dotiert ist. Das Wirtsgitter ist immer ein anorganisches sauerstoffhaltiges Material wie Oxide , Aluminate, Phosphate, Borate, Sulfate oder Silikate. Der Aktivator ist ein Metallion aus der Gruppe $Pr^{3+}$, $Bi^{3+}$ und $Pb^{2+}$. $CaSO_4$:Pb, $SrSO_4$:Pb, $MgSO_4$:Pb, $(Ca,Mg)SO_4$:Pb $(Ca,Mg,Sr)SO_4$:Pb, $(Ca,Sr)SO_4$:Pb, $CaLi_2SiO_4$:Pb, $SrSiO_3$:Pb, $(Ca,Sr,Ba)SiO_3$:Pb, $Ba(Y,Gd,Lu)B_9O_{16}$:Bi, $YF_3$Bi, YOF:Bi, $(Gd,Y)OF$:Bi,Pr, $Y_3Al_5O_{12}$:B, $(Gd,Y)_3Al_5O_{12}$:Bi, $(Gd,Y)_3(Al,Ga)_5O_{12}$:Bi, $(Ca,Y,Lu)PO_4$:Pr, $(Lu,Y)BO_3$:Pr oder $ScBO_3$:Pr sind als Leuchtstoff geeignet. Besonders bevorzugt sind Leuchtstoffe, die Praseodym enthalten, wie z. B. $LaPO_4$:Pr, $LaBO_3$Pr, $LaB_3O_6$:Pr, $YBO_3$:Pr, $YPO_4$:Pr und $Y_2SiO_5$,:Pr. Es können auch Leuchtstoffe bevorzugt sein, die Wismut enthalten, wie zB. $YPO_4$Bi und $LuPO_4$:Bi.

Wenn eine Wechselstromspannung an die Elektroden angelegt wird, kann in dem xenonhaltigen Füllgas eine stille elektrische Ladung gezündet werden. Dadurch bilden sich im Plasma ein Xenon-Excimere, d. h. Moleküle , die nur im angeregten Zustand stabil sind.

$$Xe + Xe^* = Xe_2^*$$

Die Anregungsenergie wird als UV-Strahlung mit einer Wellenlänge von $\lambda$ = 140 bis 190 nm wieder abgegeben. Diese Umwandlung von Elektronenenergie in UV-Strahlung erfolgt sehr effizient. Die erzeugten UV-Photonen, werden von den Leuchtstoffen absorbiert und die Anregungsenergie wird in dem längerwelligen Bereich des Spektrums teilweise wieder abgegeben. Der Absorprionskoeffizient der mit $Pb^{2+}$, $Bi3^+$ oder $Pr^{3+}$ aktivierten Leuchtstoffe ist für die Wellenlängen im Bereich der Xenonstrahlung besonders groß und die Quantenausbeute hoch. Das Wirtsgitter beeinflusst die genaue Lage der Energieniveaus des Aktivatorions, und infolgedessen das Emissionsspektrum.

Die Herstellung der Leuchtstoffe erfolgt durch eine Festkörperreaktion aus den Ausgangsverbindungen als feinkörnige Pulver mit einer Korngrößenverteilung zwischen 1 und 10 $\mu$m. Sie werden auf die Gefäßwände des Entladungsgefäßes mittels eines Flow-coating-Verfahrens aufgebracht. Die Beschichtungssuspensionen für das Flow-coatingVerfahren enthalten Wasser oder eine organischen Verbindung wie Butylacetat als Lösungsmittel. Die Suspension wird durch Zugabe von Hilfsmitteln , wie Stabilisatoren, Verflüssigern Cellulosederivaten , stabilisiert und in ihren rheologischen Eigenschaften beeinflußt. Die Leuchtstoffsuspension wird als dünne Schicht auf die Gefäßwände aufgebracht, getrocknet und bei 600°C eingebrannt. Das Gefäß wird dann evakuiert, um alle gasförmigen Verunreinigungen, insbesondere Sauerstoff zu entfernen. Anschließend wird das Gefäß mit Xenon mit einem Gasdruck von etwa 200 bis 300 mbar gefüllt und verschlossen.

Tabelle 1 zeigt die relative Desinfektionswirkung von Gasentladungslampen mit blei- oder praseodymhaltigen Leuchtstoffen und einer Quecksilber-Gasentladungslampe im Vergleich zu einer UV- Strahlung mit $\lambda$=265 nm und einer Desinfektionswirkung von 1.0, berechnet nach dem Wirkungsspektrum nach DIN 5031-10.

Tabelle 1:

| Relative Desinfektionswirkung | | |
|---|---|---|
| UV-Quelle | Emissionbande/linie [nm] | Relative Desinfektions-Wirkung |
| Hg Plasma | 254 | 0.84 |
| $CasO_4$:Pb | 230 | 0.73 |
| $(Ca,Mg)SO_4$4:Pb | 246 | 0.75 |
| $SrSiO_3$:Pb | 273 | 0.75 |
| $LaPO_4$:Pr | 225,258 | 0.79 |

In einer Vorrichtung zur Wasserdesinfektion kann die Gasentladungslampe auch z. B. mit einem Aktivkohlefilter zu einer Einheit kombinieren.

Eine Gasentladungslampe nach der Erfindung kann als Strahlungsquelle zur Bestrahlung von Tinten , Farben, Photoresist-Lacken und für photochemische Prozesse verwendet werden.

AUSFÜHRUNGSBEISPIEL 1

Es wird eine Suspension von $SrSiO_3$ in Butylacetat mit Nitrocellulose als Binder hergestellt. Mittels eines Flow-coating-Verfahrens wird die Leuchtstoffsuspension auf die Innenwand eines Quarzrohrs von 5 mm Durchmesser aufgebracht. Die Dicke der Leuchtstoffschicht entspricht einem Flächcngewicht des Leuchtstoffes von 3mg/cm□, Der Binder wird bei einer Temperatur unterhalb von 580°C ausgebrannt. Die Lampe wird mit Xenon mit einem Gasdruck von 200 bis 300 mbar gefüllt und dann verschlossen. Sauerstoffverunreinigungen müssen sorgfaltig vermieden werden. Auf der Außenwand der Lampe werden diagonal zwei Elektroden aus Aluminiumfolie aufgeklebt.

Die Lampe wird mit Wechselstrom mit Rechteckcharakteristik von 6kV und 25 kHz betrieben.

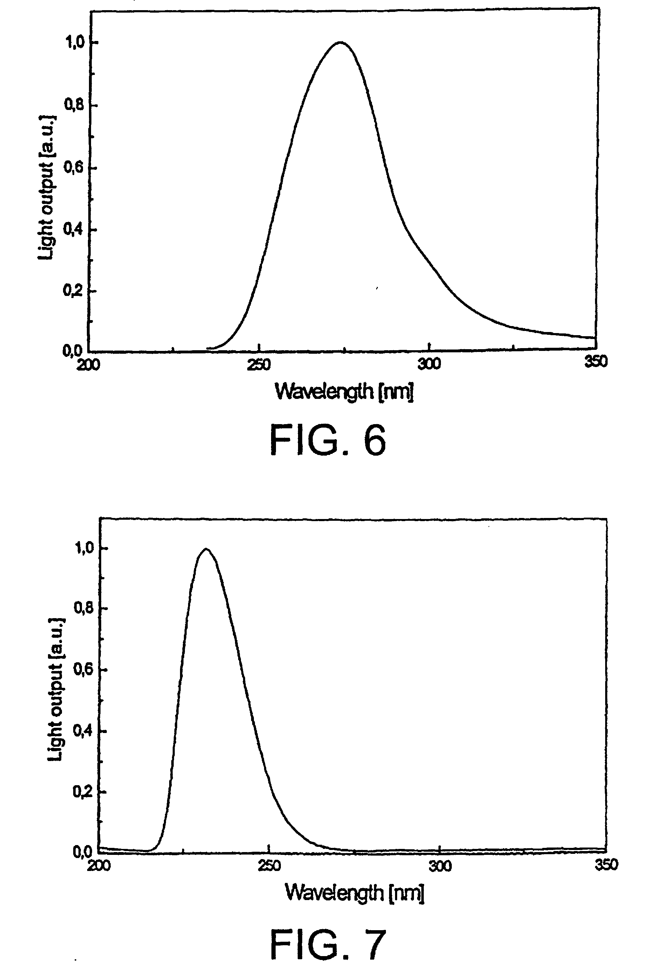

Das Emissionsspektrum Fig. 6 wurde mit einem Multianalyser für optische Spektren analysiert.

AUSFÜHRUNGSBEISPIEL 2

Das Entladungsgefäß der Lampe nach Ausführungsbeispiel 2 besteht aus einem zylindrischen Rohr aus Suprasil $^{TM}$ von 0.7 mm Dicke und 50 mm Durchmesser. Es ist Xenon mit einem Druck von 200 mbar gefüllt. In der Achse des Rohrs ist die drahtförmige innere Elektrode angeordnet. Auf der Außenwand des Entladungsgefäßes werden sechs Streifen aus Silberfolie parallel zur inneren Elektrode als äußere Elektroden aufgeklebt. Die innere Oberfläche der Außenwandung wird mit einer Leuchtstoffschicht beschichtet, die $CaSO_4$:Pb als Leuchtstoffschicht enthält.

Die Lampe wird mit Wechselstrom mit Rechteckcharakteristik von 6 kV und 25 kHz betrieben.

Das Emissionsspektrum Fig. 7 wurde mit einem Multianalyser für optische Spektren analysiert.

AUSFÜHRUNGSBEISPIEL 3

Das Entladungsgefäß der Lampe nach Ausführungsbeispiel 3 besteht aus zwei koaxialen Rohren aus Suprasil$^{TM}$ von 0.7 mm Dicke und 50 mm Durchmesser, die an ihren beiden Enden gasdicht miteinander verbunden sind. Es ist Xenon mit einem Druck von 200 mbar gefüllt. Auf der Außenwand des Entladungsgefäßes werden sechs Streifen aus Silberfolie parallel zur Rohrachse aufgeklebt. Sie bilden paarweise die ersten und zweiten Elektroden. Die innere Oberfläche des äußeren Glasrohrs wird mit einer Leuchtstoifschicht beschichtet, die $(Ca,Mg)SO_4$:Pb als Leuchtstoffschicht enthält.

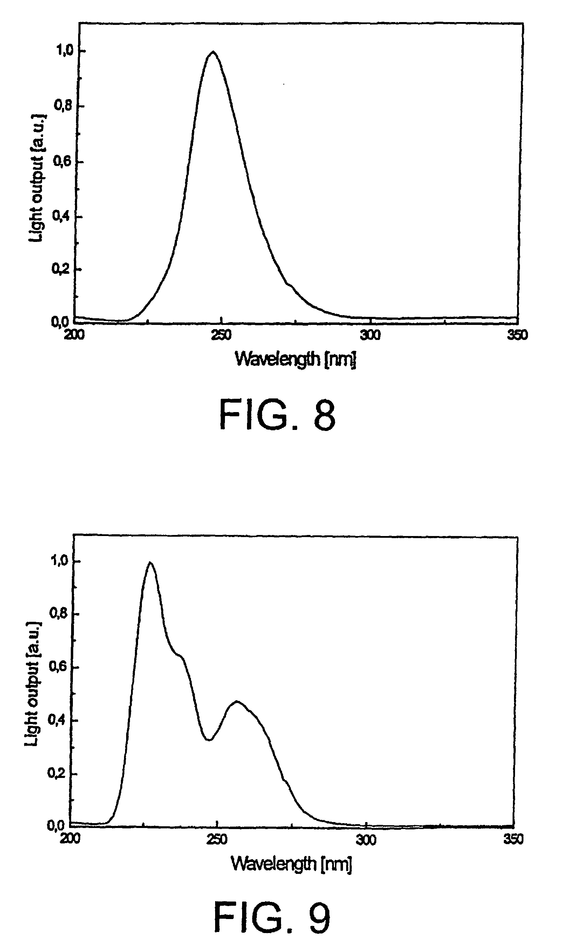

Die Lampe wird mit Wechselstrom mit Rechteckcharakteristik von 6 kV und 25 kHz betrieben. Das Emissionsspektrum Fig. 8 wurde mit einem Multianalyser für optische Spektren analysiert.

AUSFÜHRUNGSBEISPIEL 4

Das Entladungsgefäß der Lampe nach Ausführungsbeispiel 4 besteht aus zwei koaxialen Rohren aus Suprasil$^{TM}$ von 0.7 mm Dicke und 50 mm Durchmesser, die an ihren beiden Enden gasdicht miteinander verbunden sind. Es ist Xenon mit einem Druck von 200 mbar gefüllt. Auf der Außenwand des Entladungsgefäßes werden sechs Streifen aus Silberfolie parallel zur Rohrachse aufgeklebt. Sie bilden paarweise die ersten und zweiten Elektroden. Die innere Oberfläche des inneren Glasrohrs wird mit einer Leuchtstoffschicht beschichtet, die $LaPO_4$:Pr als Leuchtstoffschicht enthält.

Die Lampe wird mit Wechselstrom mit Rechteckcharakteristik von 6 kV und 25 kHz betrieben. Das Emissionsspektrum Fig. 9 wurde mit einem Multianalyser für optische Spektren analysiert

**Patentansprüche**

1. Vorrichtung zur Desinfektion von Wasser, die eine Gasentladungslampe mit einem Entladungsgefäß mit Wandungen, die aus einem dielektrischen Material bestehen, die auf ihrer äußeren Oberfläche mindestens mit einer ersten Elektrode versehen sind und mit einer Gasfüllung, die Xenon enthält, umfaßt,
   **dadurch gekennzeichnet,**
   **daß** die Wandungen mindestens auf einem Teil ihrer inneren Oberfläche mit einem Überzug, der einen im UV-C-Bereich emittierenden Leuchtstoff, der einen Aktivator aus der Gruppe $Pb^{2+}$, $Bi^{3+}$ und $Pr^{3+}$ in einem Wirtsgitter enthält, umfasst, versehen sind.

2. Vorrichtung zur Desinfektion von Wasser gemäß Anspruch 1,
   **dadurch gekennzeichnet,**
   **daß** der Leuchtstoff $Pr^{3+}$ und Lanthan enthält.

3. Vorrichtung zur Desinfektion von Wasser gemäß Anspruch 1,
   **dadurch gekennzeichnet,**
   **daß** der Leuchtstoff aus der Gruppe $LaPO_4$:Pr, $LaBO_3$:Pr, $LaB_3O_6$:Pr, YP04:Pr, $YBO_3$:Pr und $Y_2SiO_5$Pr ausgewählt ist.

4. Vorrichtung zur Desinfektion von Wasser gemäß Anspruch 1,
   **dadurch gekennzeichnet,**
   **daß** der Leuchtstoff aus der Gruppe $YPO_4$:Bi und $LuPO_4$:Bi ausgewählt ist.

5. Vorrichtung zur Desinfektion von Wasser gemäß Anspruch 1,
   **dadurch gekennzeichnet,**
   **daß** der Leuchtstoff $Pr^{3+}$ und Yttrium enthält.

6. Vorrichtung zur Desinfektion von Wasser gemäß Anspruch 1,

**dadurch gekennzeichnet,**
**daß** die Elektroden aus einem Metall oder einer Legierung bestehen, das UV-C-Licht reflektiert.

7. Gasentladungslampe mit einem Endadungsgefäß mit Wandungen, die aus einem dielektrischen Material bestehen, die auf ihrer äußeren Oberfläche mindestens mit einer ersten Elektrode versehen sind und mit einer Gasfüllung, die Xenon enthält, umfaßt,
**dadurch gekennzeichnet,**
**daß** die Wandungen mindestens auf einem Teil ihrer inneren Oberfläche mit einem Überzug, der einen im UV-C-Bereich emittierenden Leuchtstoff, der einen Aktivator aus der Gruppe $Pb^{2+}$, $Bi^{3+}$ und $P^{3+}$ in einem Wirtsgitter enthält, umfasst, versehen sind.

**Claims**

1. A device for disinfecting water, comprising a gas discharge lamp including a discharge vessel with walls of a dielectric material, the outer surface of said walls being provided at least with a first electrode, and the discharge vessel containing a xenon-containing gas filling, **characterized in that** the walls are provided, at least on a part of the inner surface, with a coating containing a phosphor emitting in the UV-C range, said phosphor containing an activator from the group formed by Pb2+, $Bi^{3+}$ and $Pr^{3+}$ in a host lattice.

2. A device for disinfecting water as claimed in claim 1, **characterized in that** the phosphor contains $Pr3^{+}$ and lanthanum.

3. A device for disinfecting water as claimed in claim 1, **characterized in that** the phosphor is selected from the group comprising $LaPO_4$:Pr, $LaBO_3$:Pr, $LaB_3O_6$:Pr, $YPO_4$:Pr, $YBO_3$:Pr, and $Y_zSiO5$:Pr.

4. A device for disinfecting water as claimed in claim 1, **characterized in that** the phosphor is selected from the group comprising $YPO_4$:Bi: and $LuPO_4$:Bi.

5. A device for disinfecting water as claimed in claim 1, **characterized in that** the phosphor contains $Pr^{b+}$ and Yttrium.

6. A device for disinfecting water as claimed in claim 1, **characterized in that** the electrodes are composed of a metal or an alloy reflecting UV-C light.

7. A gas discharge lamp comprising a discharge vessel with walls of a dielectric material, the outer surface of said walls being provided at least with a first electrode, and the discharge vessel being filled with a gas containing xenon, **characterized in that** the walls are provided, at least on a part of their inner surface, with a coating containing a phosphor emitting in the UV-C range, said phosphor containing an activator from the group formed by $Pb^{2+}$, $Bi^{3+}$ and $Pr^{3+}$ in a host lattice.

**Revendications**

1. Dispositif de désinfection de l'eau qui comprend une lampe à décharge au gaz avec un tube de décharge doté de parois qui sont composées d'un matériau diélectrique et portent au moins une première électrode sur leur surface externe et avec une charge de gaz qui contient du xénon, **caractérisé en ce que** les parois sont dotées, du moins sur une partie de leur surface interne, d'un revêtement qui comprend une substance luminescente émettant dans la gamme UV-C qui contient un activateur du groupe $Pb^{2+}$, $Bi^{3+}$ et $Pr^{3+}$ dans une grille hôte.

2. Dispositif de désinfection de l'eau conformément à la revendication 1, **caractérisé en ce que** la substance luminescente contient $Pr^{3+}$ et du lanthane.

3. Dispositif de désinfection de l'eau conformément à la revendication 1, **caractérisé en ce que** la substance luminescente est sélectionnée dans le groupe $LaPO_4$:Pr, $LaBO_3$:Pr, $LaB_3O_6$:Pr, $YPO_4$:Pr, $YBO3$:Pret $Y_2SiO_5$Pr.

4. Dispositif de désinfection de l'eau conformément à la revendication 1, **caractérisé en ce que** la substance luminescente est sélectionnée dans le groupe $YPO_4$:Bi et $LuPO_4$:Bi.

5. Dispositif de désinfection de l'eau conformément à la revendication 1, **caractérisé en ce que** la substance luminescente contient $Pr^{3+}$ et de l'yttrium.

6. Dispositif de désinfection de l'eau conformément à la revendication 1, **caractérisé en ce que** les électrodes se composent d'un métal ou d'un alliage qui réfléchit la lumière UV-C.

7. Lampe à décharge au gaz avec un tube de décharge doté de parois qui sont composées d'un matériau diélectrique, portent au moins une première électrode sur leur surface externe et avec une charge de gaz qui contient du xénon, **caractérisé en ce que** les parois sont dotées, du moins sur une partie de leur surface interne, d'un revêtement qui comprend une substance luminescente émettant dans la gamme UV-C qui contient un activateur du groupe $Pb^{2+}$, $Bi^{3+}$ et $Pr^{3+}$ dans une grille hôte.

FIG. 1

FIG. 2

FIG. 3

FIG. 4

FIG. 5

FIG. 6

FIG. 7

11

FIG. 8

FIG. 9